Europäisches Patentamt

European Patent Office

Office européen des brevets

(11) Publication number: **0 489 353 A1**

# EUROPEAN PATENT APPLICATION

(21) Application number: **91120339.6**

(22) Date of filing: **27.11.91**

(51) Int. Cl.5: **B29D 30/34**, B29C 53/58

(30) Priority: **04.12.90 IT 6796090**

(43) Date of publication of application:
**10.06.92 Bulletin 92/24**

(84) Designated Contracting States:
**DE ES FR GB IT**

(71) Applicant: **Bridgestone Corporation**
**10-1, Kyobashi 1-Chome Chuo-Ku**
**Tokyo 104(JP)**

(72) Inventor: **Siegenthaler, Karl J.**
**Via dei Pescatori, 153**
**I-00100 Roma (Ostia)(IT)**

(74) Representative: **Jorio, Paolo et al**
**Studio Torta, Via Viotti, 9**
**I-10121 Torino(IT)**

(54) **Method of manufacturing a reinforced tubular component of a motor vehicle tire carcass.**

(57) A method of manufacturing a reinforced component of a motor vehicle tire carcass, in particular, a tubular toroidal body ply (12)(20)(24)(25) extending about and encapsulating two annular lateral beads (8), whereby the two annular beads (8) are arranged coaxially and separated by a first distance (A)(C)(D) greater than a final distance (B), so as to define, at least partially, a toroidal frame (11)(21)(26) about which an elongated reinforcing element (13) is wound to form a semifinished tubular body ply (12)-(20)(24)(25) encapsulating the beads (8); the semifinished tubular body ply (12)(20)(24)(25) then being shaped radially by at least bringing the beads (8) together to within the final distance (B), so as to form the semifinished tubular body ply (12)(20)(24)(25) into a finished tubular body ply (1) having a substantially U-shaped cross section.

Fig.3

Fig.4

The present invention relates to a method of manufacturing a reinforced tubular component of a motor vehicle tire carcass, in particular, a tubular toroidal body ply surrounding and enclosing two annular lateral beads.

Italian Patent Applications n.67958-A/90 and n.67959-A/90, filed concurrently by the present applicant and the content of which is incorporated herein in the interests of full disclosure, relate to motor vehicle tires comprising respective carcasses, each having a tubular toroidal body ply of substantially U-shaped section, and two lateral beads enclosed inside the tubular body ply.

The aim of the present invention is to provide a method of manufacturing the above tubular body ply in such a manner as to enable the use of continuous, i.e. jointfree, annular beads.

That is, the aim of the present invention is to provide a method of manufacturing the above tubular body ply in such a manner as to enable the use of finished or continuous annular elements, such as the beads, instead of split elements inserted inside the tubular body ply and then joined to produce the finished annular element. With this aim in view, according to the present invention, there is provided a method of manufacturing a reinforced tubular component of a motor vehicle tire carcass, in particular, a tubular toroidal body ply surrounding and enclosing two annular lateral beads, characterised by the fact that it comprises stages consisting in:

a) forming an axially-collapsible annular frame by aligning said beads at a first distance from each other along a common axis;

b) forming a semifinished tubular annular body ply enclosing said frame by winding at least one continuous elongated reinforcing element about and along said frame; and

c) shaping said semifinished tubular body ply by at least moving said beads axially towards each other so that they are separated by a second distance less than said first distance.

A number of non-limiting embodiments of the present invention will be described by way of examples with reference to the accompanying drawings, in which:

Fig.1 shows a schematic view in perspective of a tubular body ply formed using the method according to the present invention;

Fig.2 shows a schematic partially-exploded cross section of the Fig.1 body ply;

Fig.3 shows a schematic view in perspective, with parts removed for simplicity, of one stage in the manufacture of the Fig.1 body ply;

Fig.4 shows a cross section of the Fig.3 body ply;

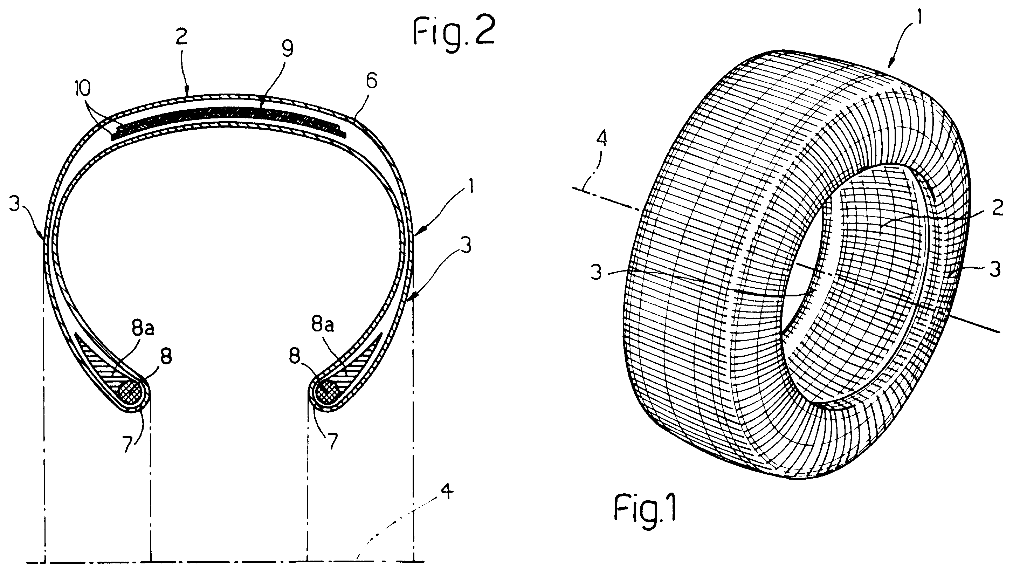

Fig.s 5 and 6 are similar to Fig.s 3 and 4 and show, with parts removed for simplicity, a particular embodiment of the method for manufacturing the Fig.1 body ply;

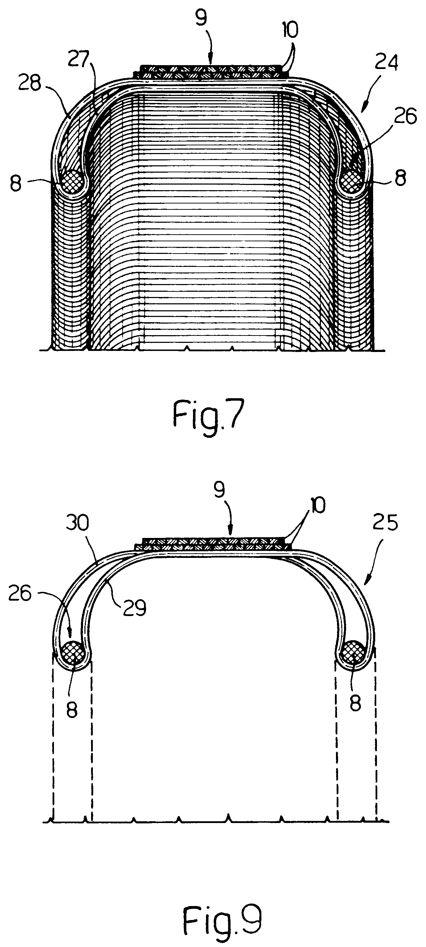

Fig.7 is similar to Fig.2 and shows a further tubular body ply formed using the method according to the present invention;

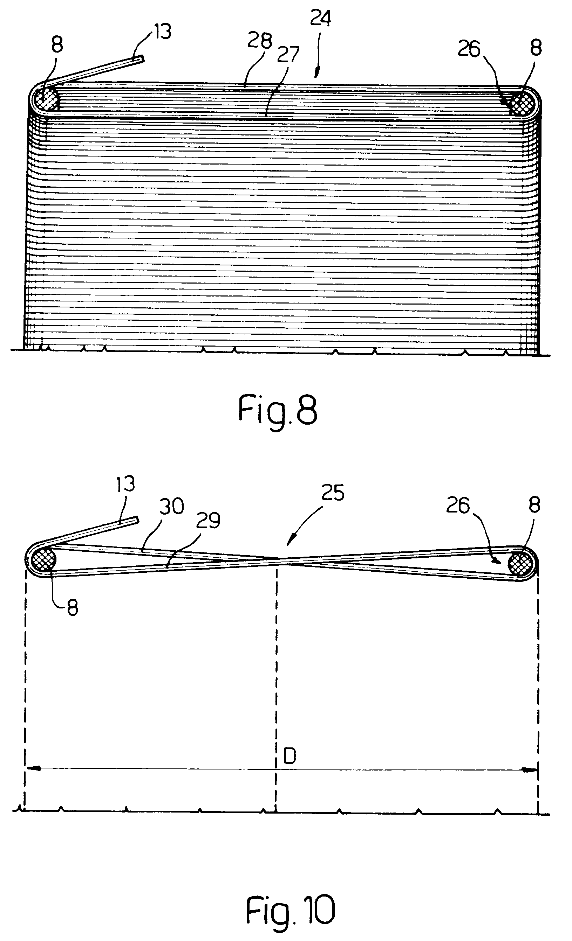

Fig.8 shows a cross section of one stage in the manufacture of the Fig.7 body ply;

Fig.s 9 and 10 are similar to Fig.s 7 and 8 and show a further tubular body ply formed using the method according to the present invention.

Number 1 in Fig.1 indicates a body ply for a motor vehicle tire (not shown). Body ply 1 is substantially toroidal and presents a substantially U-shaped cross section defined by an annular intermediate portion 2 and two annular lateral portions 3 extending from opposite lateral edges of intermediate portion 2 towards an axis 4 of the same.

According to the Fig.2 embodiment, body ply 1 is tubular and defined by two superimposed, radially-spaced layers 5 and 6, the respective lateral edges of which are rendered integral by respective curved portions 7. Each curved portion 7 surrounds a respective annular bead 8 having a profile 8a and extending along toroidal body ply 1, in particular, along the inner edge of respective lateral portion 3.

In addition to beads 8, tubular body ply 1 also encloses a substantially cylindrical tread belt 9 located between the portions of layers 5 and 6 defining intermediate portion 2, and consisting of one or more (in the example shown, two) superimposed tread plies 10.

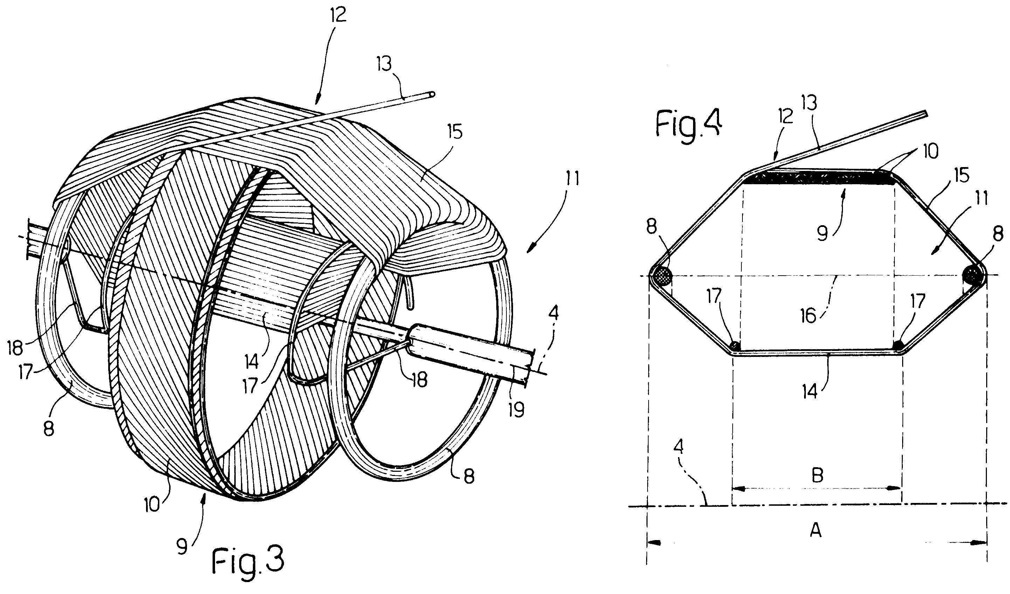

A first method of manufacturing the above tubular body ply 1 will be described with reference to Fig.s 3 and 4. As shown more clearly in Fig.4, tread belt 9 and beads 8 (the profiles 8a of which are omitted in Fig.s 3 and 4 for the sake of simplicity) are first aligned along common axis 4, with beads 8 arranged on opposite sides of and at the same distance from tread belt 9, and at a first given distance "A" from each other, so as to define a collapsible annular frame 11.

Beads 8 and tread belt 9 are supported in the Fig.3 and 4 position via supporting means (not shown) which provide either for maintaining said elements in a fixed position or, preferably, for rotating frame 11 about axis 4 (anticlockwise in Fig.2).

At this point, a semifinished tubular annular body ply 12 enclosing frame 11 is formed by winding a continuous elongated reinforcing element, such as a cord 13 preferably coated with green elastomeric material, about and along frame 11, so that the adjacent turns of cord 13 touch.

According to a variation not shown, a number of cords 13 may obviously be used simultaneously for forming a multi-start spiral about frame 11.

As shown more clearly in Fig.3, semifinished body ply 12 comprises an inner layer 14 and an outer layer 15 coaxial with each other, each extending between beads 8, and the outer layer 15 of which extends contacting the outer surface of tread belt 9.

As shown in Fig.s 3 and 4, cord 13 is wound about frame 11 in such a manner that inner layer 14 is a mirror image of outer layer 15 in relation to a cylindrical surface 16 (Fig.4) through beads 8. This is made possible by means of two curved guide members 17 coaxial with axis 4 and located inside tread belt 9. Each guide member 17 is coplanar with a respective lateral edge of belt 9, and presents the same radius as beads 8 less the difference between the radii of belt 9 and beads 8. Each guide member 17 extends about axis 4 over an arc of less than 360° and, preferably, of approximately 180°.

The front edge of each guide member 17 is connected, via a substantially radial arm 18, to a supporting shaft 19 coaxial with axis 4 and rotatable in relation to frame 11. In particular, if frame 11 is supported in a fixed position, shaft 19 turns about axis 4, whereas, if frame 11 is supported in such a manner as to turn about axis 4, shaft 19 is fixed.

Consequently, if, as in the example shown, guide members 17 extend over an arc of 180° and frame 11 is supported for rotation about axis 4, when cord 13 is wound about frame 11, each new turn extends over and close to the front end of guide members 17, as well as over belt 9 and beads 8, whereas the turn 180° upstream from said new turn slides over the free rear ends of guide members 17. When semifinished body ply 12 is completed, guide members 17 are extracted from body ply 12 by rotating frame 11 by a further 180° about axis 4.

At this point, beads 8, which up to now have been maintained in the original position separated by said initial distance "A", are brought together so that they are separated by a final distance "B" (Fig.4) substantially equal to that of beads 8 on the finished tire. At the same time, pressure is applied by known means (not shown) on inner layer 14, so as to move it outwards into contact with the inner surface of belt 9 and substantially parallel with layer 15, and so form body ply 12 into finished body ply 1.

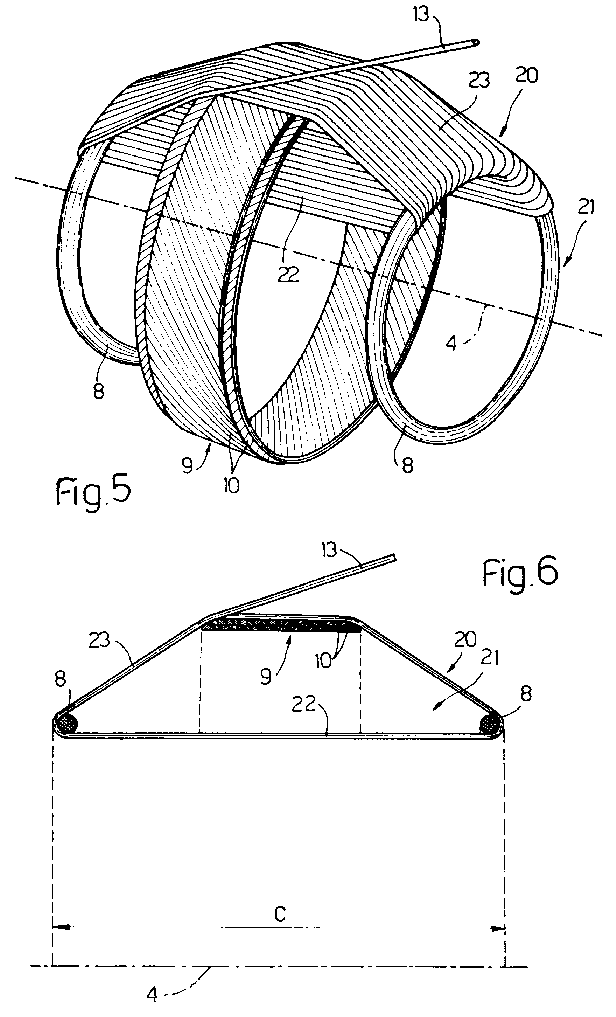

According to the variation shown in Fig.s 5 and 6, a semifinished body ply 20, similar to 12, is produced by winding cord 13 (or, in this case also, more than one cord 13) about a frame 21 consisting, like frame 11, of belt 9 and beads 8 (also shown without profiles 8a for the sake of simplicity). In this case, however, frame 21 does not cooperate with any guide members such as guide members 17. In the case of frame 21, beads 8 are arranged coaxial with belt 9 and are separated by an initial distance "C" (Fig.6) greater than distance "A" on frame 11, thus enabling guide members 17 to be dispensed with, and semifinished body ply 20 presents a cylindrical inner layer 22 coaxial with axis 4, and an outer layer 23 similar to layer 15.

In this case also, body ply 20 is formed into the finished body ply 1 shown in Fig.s 1 and 2 by bringing beads 8 gradually together into the Fig.2 position and at the same time applying outward pressure on layer 22. According to the alternative embodiments shown respectively in Fig.s 7, 8 and 9, 10, two different semifinished body plies, numbered respectively 24 and 25, are produced by winding cord 13 (or more than one cord 13) about a frame 26 consisting solely of beads 8 (also shown without profiles 8a for the sake of simplicity) arranged coaxially to each other and to axis 4 (not shown in Fig.s 7 to 10). In the case of frame 26, beads 8 are separated by a distance "D" (Fig.10) even greater than distance "C" on frame 21.

As shown in Fig.s 7 and 8, semifinished body ply 24 is produced by winding cord 13 about frame 26 in such a manner as to define a substantially cylindrical inner layer 27 and outer layer 28 coaxial with axis 4 (not shown in Fig.s 7 to 10).

As shown in Fig.s 9 and 10, semifinished body ply 25 is produced by winding cord 13 in the form of a figure eight about frame 26, so as to define two opposed substantially truncated-cone layers 29 and 30 intersecting between beads 8.

As in the previous cases, body plies 24 and 25 are formed substantially into the finished body ply 1 shown in Fig.s 1 and 2 by bringing beads 8 gradually together into the Fig.7 and 9 positions respectively, and at the same time applying outward pressure so as to bring body plies 24 and 25 into contact with the inner surface of respective belt 9 (Fig.s 7 and 9).

## Claims

1. A method of manufacturing a reinforced tubular component of a motor vehicle tire carcass, in particular, a tubular toroidal body ply (1) surrounding and enclosing two annular lateral beads (8), characterised by the fact that it comprises stages consisting in:

    a) forming an axially-collapsible annular frame (11)(21)(26) by aligning said beads (8) at a first distance (A)(C)(D) from each other along a common axis (4);

    b) forming a semifinished tubular annular body ply (12)(20)(24)(25) enclosing said frame (11)(21)(26) by winding at least one continuous elongated reinforcing element (13) about and along said frame (11)(21)-(26); and

    c) shaping said semifinished tubular body ply (12)(20)(24)(25) by at least moving said beads (8) axially towards each other so that they are separated by a second distance (B) less than said first distance (A)(C)(D).

2. A method as claimed in Claim 1, characterised by the fact that said elongated reinforcing element (13) is a cord coated with green elastomeric material.

3. A method as claimed in Claim 1 or 2, characterised by the fact that said frame (11)(21) also comprises an annular tread belt (9) coaxial with said beads (8), which are arranged on opposite sides of and substantially symmetrically in relation to said tread belt (9); said semifinished tubular annular body ply (12)(20), produced by winding said continuous elongated reinforcing element (13) about and along said frame (11)-(21), comprising an outer annular layer (15)(23) and an inner annular layer (14)(22) coaxial with each other and each extending between said beads (8); said outer layer (15)(23) extending in contact with the outer surface of said belt (9).

4. A method as claimed in Claim 3, characterised by the fact that said elongated reinforcing element (13) is wound about said frame (21) in such a manner that said inner layer (22) of said semifinished tubular body ply (20) is cylindrical.

5. A method as claimed in Claim 3, characterised by the fact that said elongated reinforcing element (13) is guided, as it is wound about said frame (11), in such a manner that said inner layer (14) of said semifinished tubular body ply (12) is substantially a mirror image of said outer layer (15) in relation to a cylindrical surface (16) extending through said beads (8) and coaxial with said axis (4).

6. A method as claimed in Claim 5, characterised by the fact that said elongated reinforcing element (13) is guided, as it is wound about said frame (11), by two curved guide members (17) coaxial with said axis (4) and located inside said belt (9); each said guide member (17) being substantially coplanar with a respective annular lateral edge of said belt (9), having the same radius as said beads (8) less the difference between the radii of said belt (9) and said beads (8), and being rotatable about said axis (4) in relation to said frame (11).

7. A method as claimed in Claim 6, characterised by the fact that each said guide member (17) extends about said axis (4) by an angle of less than 360°.

8. A method as claimed in Claim 7, characterised by the fact that said angle is approximately 180°.

9. A method as claimed in Claim 1 or 2, characterised by the fact that said semifinished tubular annular body ply (24), produced by winding said continuous elongated reinforcing element (13) about and along said frame (26), comprises a substantially cylindrical outer annular layer (28) and inner annular layer (27) coaxial with each other, and each extending between said beads (8).

10. A method as claimed in Claim 1 or 2, characterised by the fact that said semifinished tubular annular body ply (25), produced by winding said continuous elongated reinforcing element (13) about and along said frame (26), comprises two coaxial annular layers (29, 30) extending between said beads (8), substantially in the form of two opposed truncated cones, and intersecting between said beads (8).

Fig.1

Fig.2

Fig.4

Fig.3

Fig.5

Fig.6

Fig.7

Fig.9

Fig.8

Fig.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 141 942 (JANUS) | 1,2,9,11 | B29D3D/34 |
| Y | | 10 | B29C53/58 |
| | * the whole document * | | |
| | --- | | |
| Y | FR-A-565 504 (SPYKER) | 10 | |
| | * page 2; figure 3 * | | |
| | --- | | |
| X | WO-A-8 302 749 (JANUS) | 1,2,9,11 | |
| | * abstract; figures 1-8 * | | |
| | --- | | |
| X | US-A-3 336 964 (ALEXEFF) | 1,2,3,5 | |
| | * the whole document * | | |
| | ----- | | |
| | | | TECHNICAL FIELDS SEARCHED (Int. Cl.5) |
| | | | B29D |
| | | | B29C |

The present search report has been drawn up for all claims

| Place of search | Date of completion of the search | Examiner |
|---|---|---|
| THE HAGUE | 06 FEBRUARY 1992 | SUENDERMANN R.O. |